# EUROPEAN PATENT APPLICATION

(11) **EP 2 937 471 A1**
(43) Date of publication of application: **28.10.2015**
(21) Application number: 12890292.1
(22) Date of filing: 20.12.2012
(51) Int. Cl.: E02F 9/22, E02F 9/26

(54) **ACTUATOR CONTROLLING DEVICE FOR CONSTRUCTION EQUIPMENT AND ACTUATOR CONTROLLING METHOD THEREFOR**

(71) Applicant: Volvo Construction Equipment AB, 631 85 Eskilstuna (SE)
(72) Inventor: KIM, Young-Cheol, Changwon-si Gyeongsangnam-do 645-708 (KR); LEE, Myung-Hoon, Changwon-si Gyeongsangnam-do 642-370 (KR); KIM, Ji-Eun, Changwon-si Gyeongsangnam-do 642-370 (KR)
(74) Representative: Stöckeler, Ferdinand
(86) International application number: PCT/KR2012/011180
(87) International publication number: WO 2014/098285

(57) **Abstract**

An actuator control apparatus for a construction machine and a method for controlling the same are disclosed, which can provide a more convenient and simplified operator equipment operation environment through reduction of unnecessary switches. The actuator control apparatus for a construction machine includes a first key input means for displaying HVAC control screen information having a plurality of different pieces of HVAC mode information, a second key input means having a plurality of lower setting keys for selection of the specific HVAC mode and operator setting for a parameter of the selected HVAC mode, and a controller displaying the preset HVAC control screen information when a first key signal is input from the first key input means and differently controlling the operation of the actuator that matches the specific HVAC mode in accordance with the specific HVAC mode information selected by the second key input means and the operator setting parameter for the specific HVAC mode.

## Description

### TECHNICAL FIELD

The present invention relates to an actuator control apparatus for a construction machine and a method for controlling the same, and more particularly, to an actuator control apparatus for a construction machine and a method for controlling the same, which can control a plurality of HVAC (Heating Ventilation Air Conditioning) modes only by a first key input means that is one representative switch button and a second key input means provided with a plurality of lower setting keys, and thus can provide a more convenient and simplified operator equipment operation environment through reduction of the number of switches.

### BACKGROUND OF THE INVENTION

According to an actuator control method for a construction machine, which is related to HVAC, in the related art, a separate switch is provided for each actuator related to a specific HVAC mode (e.g., in an AC on/off selection mode, the corresponding actuator becomes a compressor), and the related actuator is controlled through the corresponding switch.

In this case, however, since a separate switch should be provided for each HVAC mode in order to control a specific HVAC mode, a large number of switches are required to control the entire HVAC modes.

That is, since a large number of HVAC modes, such as a ventilation strength selection mode, a ventilation direction selection mode, a ventilation temperature selection mode, a defrost on/off selection mode, an indoor air/outdoor air selection mode, an AC on/off selection mode, and an auto/manual selection mode, are provided, a large number of switches are required to control the entire HVAC modes. Accordingly, equipment complexity is increased, and an equipment operation interface by an operator is unable to be facilitated.

### SUMMARY OF THE INVENTION

Accordingly, the present invention has been made to solve the aforementioned problems occurring in the prior art, and it is an object of the present invention to provide an actuator control apparatus for a construction machine and a method for controlling the same, which can control a plurality of HVAC modes only by a first key input means that is one representative switch button and a second key input means provided with a plurality of lower setting keys, and thus can provide a more convenient and simplified operator equipment operation environment through reduction of the number of switches.

### TECHNICAL SOLUTION

To achieve the above objects, in accordance with an embodiment of the present invention, there is provided an actuator control apparatus for a construction machine, controlling an operation of a corresponding actuator in accordance with an operator setting parameter for a specific HVAC (Heating Ventilation Air Conditioning) mode, which includes a first key input means for displaying HVAC control screen information having a plurality of different pieces of HVAC mode information; a second key input means having a plurality of lower setting keys for selection of the specific HVAC mode and operator setting for a parameter of the selected HVAC mode; and a controller displaying the preset HVAC control screen information when a first key signal is input from the first key input means and differently controlling the operation of the actuator that matches the specific HVAC mode in accordance with the specific HVAC mode information selected by the second key input means and the operator setting parameter for the specific HVAC mode.

Preferably, the controller may include a first signal sensing unit sensing the first key signal input from the first key input means; a display control unit displaying the preset HVAC control screen information if the first signal sensing unit senses the first key signal; a selection module selecting the specific HVAC mode information in accordance with a user key operation by the second key input means; a setting module setting the parameter of the selected specific HVAC mode in accordance with the user key operation by the second key input means; and an actuator control unit differently controlling the operation of the actuator that matches the HVAC mode information selected by the selection module in accordance with the parameter information set by the setting module.

The second key input means may further include a lower escape key making the HVAC control screen information that is displayed on a screen in accordance with an input of the first key signal of the first key input means disappear from the screen by inactivating the HVAC control screen information, and the controller may further include a module making the displayed HVAC control screen information disappear from the screen by inactivating the HVAC control screen information through the display control unit when the lower escape key is input.

Preferably, the selection module may designate the specific HVAC mode information in accordance with the user key operation by the second key input means, and automatically select the designated specific HVAC mode information if the key signal is not input until a preset time elapses.

Preferably, the plurality of different HVAC modes may include at least one of a ventilation strength selection mode, a ventilation direction selection mode, a ventilation temperature selection mode, a defrost on/off selection mode, an indoor air/outdoor air selection mode, an AC on/off selection mode, and an auto/manual selection mode.

In accordance with another embodiment of the present invention, there is provided a method for controlling an actuator control apparatus for a construction machine, controlling an operation of a corresponding actuator in accordance with an operator setting parameter for a specific HVAC mode, which includes the actuator control apparatus displaying preset HVAC control screen information if a first key signal is input from a first key input means for displaying the HVAC control screen information having a plurality of different pieces of HVAC mode information; and the actuator control apparatus differently controlling the operation of the actuator that matches a specific HVAC mode in accordance with the specific HVAC mode information selected by the second key input means having a plurality of lower setting keys for selection of the specific HVAC mode and operator setting for a parameter of the selected HVAC mode and operator setting parameter information of the specific HVAC mode.

Preferably, the step of displaying the HVAC control screen information may include the actuator control apparatus sensing the first key signal input from the first key input means; and the actuator control apparatus displaying the preset HVAC control screen information if the first key signal is sensed.

The second key input means may further include a lower escape key making the HVAC control screen information that is displayed on a screen in accordance with an input of the first key signal of the first key input means disappear from the screen by inactivating the HVAC control screen information, and the method for controlling an actuator control apparatus may further include making the displayed HVAC control screen information disappear from the screen by inactivating the displayed HVAC control screen information when the lower escape key is input.

Preferably, the step of differently controlling the operation of the actuator may include the actuator control apparatus selecting the specific HVAC mode information in accordance with a user key operation by the second key input means; setting the parameter of the selected specific HVAC mode in accordance with the user key operation by the second key input means; and the actuator control apparatus differently controlling the operation of the actuator that matches the selected HVAC mode information in accordance with to the set parameter information.

The step of selecting the specific HVAC mode information may designate the specific HVAC mode information in accordance with the user key operation by the second key input means, and automatically select the designated specific HVAC mode information if the key signal is not input until a preset time elapses.

Preferably, the plurality of different HVAC modes may include at least one of a ventilation strength selection mode, a ventilation direction selection mode, a ventilation temperature selection mode, a defrost on/off selection mode, an indoor air/outdoor air selection mode, an AC on/off selection mode, and an auto/manual selection mode.

### ADVANTAGEOUS EFFECT

According to the present invention having the above-described configuration, since the plurality of HVAC modes can be controlled only by the first key input means that is one representative switch button and the second key input means provided with a plurality of lower setting keys, the number of switches can be reduced to provide a more convenient and simplified operator equipment operation environment.

### BRIEF DESCRIPTION OF THE DRAWINGS

The above objects, other features and advantages of the present invention will become more apparent by describing the preferred embodiments thereof with reference to the accompanying drawings, in which:
Fig. 1 is a block diagram illustrating the configuration of an actuator control apparatus for a construction machine according to the present invention;
Fig. 2 is a flowchart illustrating a method for controlling an actuator control apparatus for a construction machine according to the present invention;
Fig. 3 is a diagram illustrating a key input means according to the present invention; and
Fig. 4A is an exemplary diagram of a UI (User Interface) illustrating HVAC control screen information for selecting a ventilation direction adjustment mode according to the present invention; and
Fig. 4B is an exemplary diagram of a UI illustrating HVAC control screen information for selecting a ventilation temperature adjustment mode according to the present invention.

### *Explanation of reference numerals for main parts in the drawing

100: first key input means
110: second key input means
120: controller
121: first signal sensing unit
122: display control unit
123: selection module
124: setting module
125: actuator control unit

### DETAILED DESCRIPTION OF THE INVENTION

Hereinafter, the present invention will be described with reference to the accompanying drawings.

However, embodiments disclosed hereinafter are nothing but specific details provided to assist those of ordinary skill in the art in a comprehensive understanding of the invention, and thus the scope of the present invention is not limited thereto.

For clear explanation of the present invention, portions that are not related to the explanation are omitted, and in the entire description of the present invention, similar drawing reference numerals are used for similar elements across various figures.

In the entire description and claims of the present invention, the term "comprises" and/or "includes" means that one or more other constituent elements are not excluded in addition to the described constituent elements unless specifically described on the contrary.

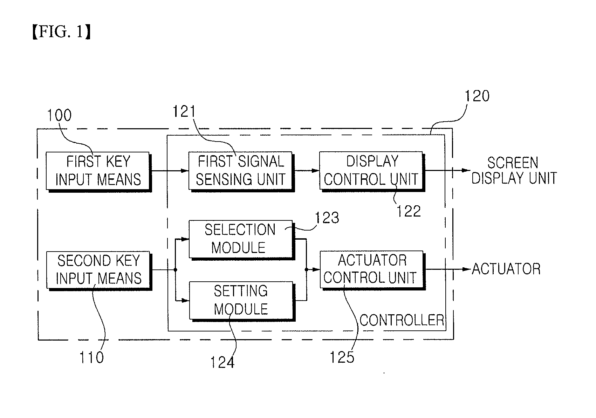

Fig. 1 is a block diagram illustrating the configuration of an actuator control apparatus for a construction machine according to the present invention.

As illustrated in Fig. 1, an actuator control apparatus for a construction machine according to the present invention controls an operation of a corresponding actuator in accordance with an operator setting parameter for a specific HVAC (Heating Ventilation Air Conditioning) mode, and briefly includes a first key input means 100, a second key input means 110, and a controller 120.

That is, the actuator control apparatus is configured to include the first key input means 100 for displaying HVAC control screen information having a plurality of different pieces of HVAC mode information, the second key input means 110 having a plurality of lower setting keys for selection of the specific HVAC mode and operator setting for a parameter of the selected HVAC mode, and the controller 120 differently controlling the operation of the specific actuator in accordance with operator selection and setting information through the first key input means 100 and the second key input means 110.

Here, the first key input means 100 is a user interface means for displaying the HVAC control screen information. That is, the first key input means 100 is a user interface means for displaying the HVAC control screen information that includes information to select any one of a plurality of HVAC modes and information to set the parameter related to the HVAC mode. A first key signal of the first key input means 100 is input to the controller 120 in accordance with a user key operation, and if the first key signal input is sensed, the controller 120 reads and displays the preset HVAC control screen information on a screen. The HVAC control screen information includes a plurality of different HVAC modes. Further, the plurality of different HVAC modes may include a ventilation strength selection mode, a ventilation direction selection mode, a ventilation temperature selection mode, a defrost on/off selection mode, an indoor air/outdoor air selection mode, an AC on/off selection mode, and an auto/manual selection mode.

The second key input means 110 is a user interface means that has the plurality of lower setting keys for selection of the specific HVAC mode and the operator setting for the parameter of the selected HVAC mode. That is, in the case where the first key signal is input from the first key input means 100 and the controller 120 displays the HVAC control screen information on the screen, the second key input means 110 selects the specific HVAC mode that is designated by a user through a "selection key" (a key that corresponds to one of the plurality of lower setting keys) as moving among the plurality of HVAC modes that are provided from the HVAC control screen information in accordance with a user key operation of the plurality of lower setting keys (e.g., up, down, left, and right movement keys), and if the specific HVAC mode is selected, the second key input means 110 performs the parameter setting for the selected HVAC mode in accordance with the user key operation of the plurality of lower setting keys. The specific HVAC mode information that is selected by the second key input means 110 and the operator setting parameter information of the specific HVAC mode are input to the controller 120, and the controller 120 controls the operation of the specific actuator using the information.

On the other hand, the selection of the specific HVAC mode information may be performed even in the case where a separate "selection key" is not provided. For example, the second key input means 110 may designate the specific HVAC mode information in accordance with the user key operation, and in the case where there is not a separate input key signal until a preset time elapses, i.e., there is not a "selection key" signal, the second key input means 110 may automatically select the designated specific HVAC mode information. The second key input means 110 may further include an escape (ESC) button which makes the HVAC control screen information that is displayed on the screen in accordance with an input of the first key signal of the first key input means 100 disappear from the screen by inactivating the HVAC control screen information.

The controller 120 displays the preset HVAC control screen information when the first key signal is input from the first key input means 100, and differently controls the operation of the actuator that matches the specific HVAC mode in accordance with the specific HVAC mode information selected by the second key input means 110 and the operator setting parameter for the specific HVAC mode. For example, in the case where the HVAC mode that is set by the operator is an "AC on/off selection mode" and the operator setting parameter information for the selected HVAC mode is "AC on" information, the controller 120 turns on a compressor that is an actuator corresponding to the selected HVAC mode (AC on/off selection mode) in accordance with the operator setting parameter information (AC on).

Specifically, the controller 120 may include a first signal sensing unit 121 sensing the first key signal input from the first key input means 100, a display control unit 122 displaying the preset HVAC control screen information if the first signal sensing unit 121 senses the first key signal, a selection module 123 selecting the specific HVAC mode information in accordance with the user key operation by the second key input means 110, a setting module 124 setting the parameter of the selected specific HVAC mode in accordance with the user key operation by the second key input means 110, and an actuator control unit 125 differently controlling the operation of the actuator that matches the HVAC mode information selected by the selection module 123 in accordance with the parameter information set by the setting module 124. In addition, in the case where the second key input means 110 further includes a lower escape key which makes the HVAC control screen information that is displayed on the screen in accordance with an input of the first key signal of the first key input means 100 disappear from the screen by inactivating the displayed HVAC control screen information, the controller 120 may further include a module that makes the displayed HVAC control screen information disappear from the screen by inactivating the HVAC control screen information through the display control unit when the lower escape key is input. Further, the selection module designates the specific HVAC mode information in accordance with the user key operation by the second key input means 110, and automatically selects the designated specific HVAC mode information if the key signal is not input until a preset time elapses.

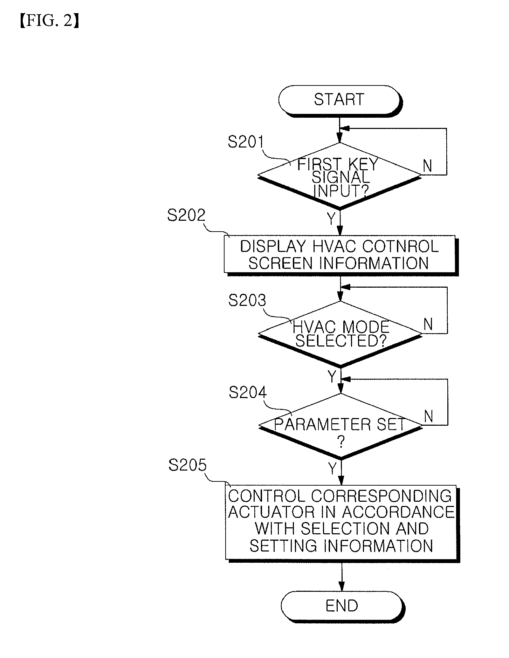

Fig. 2 is a flowchart illustrating a method for controlling an actuator control apparatus for a construction machine according to the present invention.

Hereinafter, the operation of the actuator control apparatus for a construction machine according to the present invention as illustrated in Fig. 1 will be described with reference to Fig. 2.

As illustrated in Fig. 2, according to the present invention, if a first key signal is input from the first key input means (S201), the controller displays the preset HVAC control screen information on the screen (S202).

That is, the first key signal of the first key input means is input to the controller in accordance with a user key operation, and if the first key signal input is sensed, the controller reads and displays the HVAC control screen information that is preset in a memory on the screen.

The first key input means is a user interface means for displaying the HVAC control screen information.

That is, the first key input means is a user interface means for displaying the HVAC control screen information that includes information to select any one of a plurality of HVAC modes and information to set the parameter related to the HVAC mode.

The HVAC control screen information includes a plurality of different HVAC modes.

Further, the plurality of different HVAC modes may include a ventilation strength selection mode, a ventilation direction selection mode, a ventilation temperature selection mode, a defrost on/off selection mode, an indoor air/outdoor air selection mode, an AC on/off selection mode, and an auto/manual selection mode.

Next, the controller differently controls the operation of the actuator that matches the specific HVAC mode in accordance with the specific HVAC mode information selected by the second key input means and an operator setting parameter of the specific HVAC mode (S203 to S205).

That is, the specific HVAC mode information selected by the second key input means and the operator setting parameter of the specific HVAC mode that is set by the second key input means are input to the controller.

Then, the controller controls the operation of the specific actuator using the input information.

That is, the controller differently controls the operation of the actuator that matches the specific HVAC mode that is selected in accordance with the user key operation through the second key input means in accordance with the operator setting parameter information of the specific HVAC mode that is set by the second key input means.

For example, in the case where the HVAC mode that is set by the operator is an "AC on/off selection mode" and the operator setting parameter information for the selected HVAC mode is "AC on" information, the controller turns on a "compressor" that is an actuator corresponding to the selected HVAC mode (AC on/off selection mode) in accordance with the operator setting parameter information (AC on).

The second key input means is a user interface means that has a plurality of lower setting keys for selection of the specific HVAC mode and the operator setting for the parameter of the selected HVAC mode.

That is, in the case where the first key signal is input from the first key input means and the controller displays the HVAC control screen information on the screen, the second key input means selects the specific HVAC mode that is designated by a user through a "selection key" (a key that corresponds to one of the plurality of lower setting keys) as moving among the plurality of HVAC modes that are provided from the HVAC control screen information in accordance with a user key operation of the plurality of lower setting keys (e.g., up, down, left, and right movement keys).

Further, if the specific HVAC mode is selected, the second key input means performs the parameter setting for the selected HVAC mode in accordance with the user key operation of the plurality of lower setting keys.

As described above, according to the present invention, since the plurality of HVAC modes can be controlled only by the first key input means that is one representative switch button and the second key input means provided with a plurality of lower setting keys, unnecessary switches can be reduced to provide a more convenient and simplified operator equipment operation environment.

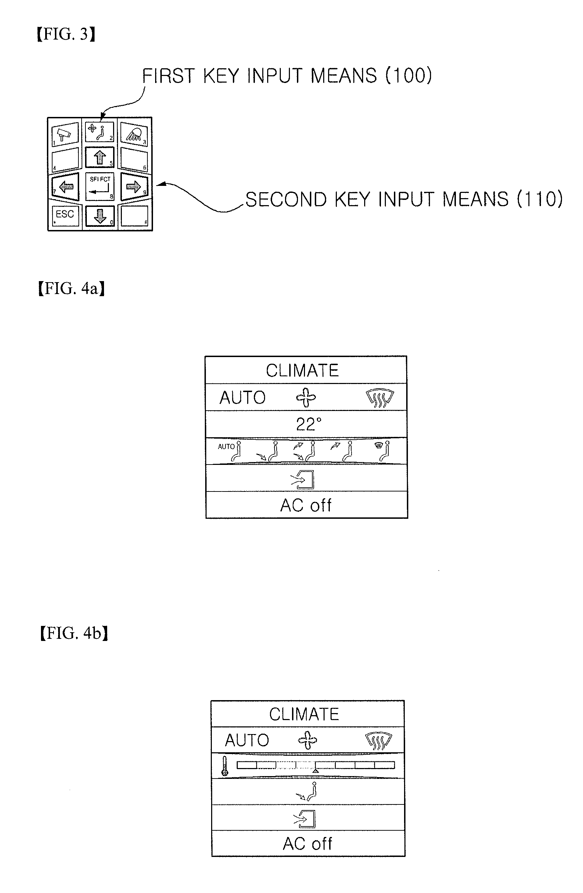

Fig. 3 is a diagram illustrating a key input means according to the present invention, and Figs. 4A and 4B are diagrams illustrating HVAC control screen information according to the present invention.

Specifically, Fig. 4A is an exemplary diagram of a UI (User Interface) illustrating HVAC control screen information for selecting a ventilation direction adjustment mode according to the present invention, and Fig. 4B is an exemplary diagram of a UI illustrating HVAC control screen information for selecting a ventilation temperature adjustment mode according to the present invention.

As illustrated in Fig. 3, the key input means according to the present invention includes a first key input means (key input means positioned in the center of the uppermost end of Fig. 3) 100 and a second key input means (key input means including up, down, left, and right movement keys positioned below the first key input means and an escape (ESC) key) 110.

Here, the first key input means 100 according to the present invention is a user interface means for displaying the HVAC control screen information. That is, the first key input means 100 is a user interface means for displaying the HVAC control screen information that includes information to select any one of a plurality of HVAC modes and information to set the parameter related to the HVAC mode. A first key signal of the first key input means 100 is input to the controller in accordance with a user key operation, and if the first key signal input is sensed, the controller displays the preset HVAC control screen information on a screen (see Figs. 4A and 4B).

The plurality of different HVAC modes may include a ventilation strength selection mode, a ventilation direction selection mode (see Fig. 4A), a ventilation temperature selection mode (see Fig. 4B), a defrost on/off selection mode, an indoor air/outdoor air selection mode, an AC on/off selection mode, and an auto/manual selection mode.

On the other hand, the second key input means 110 according to the present invention is a user interface means that has the plurality of lower setting keys for selection of the specific HVAC mode and the operator setting for the parameter of the selected HVAC mode.

That is, in the case where the first key signal is input from the first key input means 100 and the controller displays the HVAC control screen information on the screen, the second key input means 110 selects the specific HVAC mode that is designated by a user through a "selection key" (a key that corresponds to one of the plurality of lower setting keys) as moving among the plurality of HVAC modes that are provided from the HVAC control screen information in accordance with the user key operation of the plurality of lower setting keys (e.g., up, down, left, and right movement keys).

If the specific HVAC mode is selected, the second key input means 110 performs the parameter setting for the selected HVAC mode in accordance with the user key operation of the plurality of lower setting keys.

The specific HVAC mode information that is selected by the second key input means 110 and the operator setting parameter information of the specific HVAC mode are input to the controller, and the controller controls the operation of the specific actuator using the information.

Although the invention has been described with reference to the preferred embodiments in the attached figures, it is noted that equivalents may be employed and substitutions made herein without departing from the scope of the invention as recited in the claims.

### INDUSTRIAL APPLICABILITY

As described above, the present invention can be used in an actuator control apparatus for a construction machine and a method for controlling the same, which can control a plurality of HVAC (Heating Ventilation Air Conditioning) modes only by a first key input means that is one representative switch button and a second key input means provided with a plurality of lower setting keys, and thus can provide a more convenient and simplified operator equipment operation environment through reduction of the number of switches.

## Claims

1. An actuator control apparatus for a construction machine, controlling an operation of a corresponding actuator in accordance with an operator setting parameter for a specific HVAC (Heating Ventilation Air Conditioning) mode, comprising:
a first key input means for displaying HVAC control screen information having a plurality of different pieces of HVAC mode information;
a second key input means having a plurality of lower setting keys for selection of the specific HVAC mode and operator setting for a parameter of the selected HVAC mode; and
a controller displaying the preset HVAC control screen information when a first key signal is input from the first key input means and differently controlling the operation of the actuator that matches the specific HVAC mode in accordance with the specific HVAC mode information selected by the second key input means and the operator setting parameter for the specific HVAC mode.

2. The actuator control apparatus according to claim 1, wherein the controller comprises:
a first signal sensing unit sensing the first key signal input from the first key input means;
a display control unit displaying the preset HVAC control screen information if the first signal sensing unit senses the first key signal;
a selection module selecting the specific HVAC mode information in accordance with a user key operation by the second key input means;
a setting module setting the parameter of the selected specific HVAC mode in accordance with the user key operation by the second key input means; and
an actuator control unit differently controlling the operation of the actuator that matches the HVAC mode information selected by the selection module in accordance with the parameter information set by the setting module.

3. The actuator control apparatus according to claim 2, wherein the second key input means further includes a lower escape key making the HVAC control screen information that is displayed on a screen in accordance with an input of the first key signal of the first key input means disappear from the screen by inactivating the HVAC control screen information, and
the controller further includes a module making the displayed HVAC control screen information disappear from the screen by inactivating the HVAC control screen information through the display control unit when the lower escape key is input.

4. The actuator control apparatus according to claim 2, wherein the selection module designates the specific HVAC mode information in accordance with the user key operation by the second key input means, and automatically selects the designated specific HVAC mode information if the key signal is not input until a preset time elapses.

5. The actuator control apparatus according to any one of claims 1 to 4, wherein the plurality of different HVAC modes comprise at least one of a ventilation strength selection mode, a ventilation direction selection mode, a ventilation temperature selection mode, a defrost on/off selection mode, an indoor air/outdoor air selection mode, an AC on/off selection mode, and an auto/manual selection mode.

6. A method for controlling an actuator control apparatus for a construction machine, controlling an operation of a corresponding actuator in accordance with an operator setting parameter for a specific HVAC mode, comprising:
the actuator control apparatus displaying preset HVAC control screen information if a first key signal is input from a first key input means for displaying the HVAC control screen information having a plurality of different pieces of HVAC mode information; and
the actuator control apparatus differently controlling the operation of the actuator that matches a specific HVAC mode in accordance with the specific HVAC mode information selected by the second key input means having a plurality of lower setting keys for selection of the specific HVAC mode and operator setting for a parameter of the selected HVAC mode and operator setting parameter information of the specific HVAC mode.

7. The method for controlling an actuator control apparatus according to claim 6, wherein the step of displaying the HVAC control screen information comprises:
the actuator control apparatus sensing the first key signal input from the first key input means; and
the actuator control apparatus displaying the preset HVAC control screen information if the first key signal is sensed.

8. The method for controlling an actuator control apparatus according to claim 7, wherein the second key input means further includes a lower escape key making the HVAC control screen information that is displayed on a screen in accordance with an input of the first key signal of the first key input means disappear from the screen by inactivating the HVAC control screen information, and
the method for controlling an actuator control apparatus further comprises making the displayed HVAC control screen information disappear from the screen by inactivating the displayed HVAC control screen information when the lower escape key is input.

9. The method for controlling an actuator control apparatus according to claim 6, wherein the step of differently controlling the operation of the actuator comprises:
the actuator control apparatus selecting the specific HVAC mode information in accordance with a user key operation by the second key input means;
setting the parameter of the selected specific HVAC mode in accordance with the user key operation by the second key input means; and
the actuator control apparatus differently controlling the operation of the actuator that matches the selected HVAC mode information in accordance with to the set parameter information.

10. The method for controlling an actuator control apparatus according to claim 9, wherein the selection step designates the specific HVAC mode information in accordance with the user key operation by the second key input means, and automatically selects the designated specific HVAC mode information if the key signal is not input until a preset time elapses.

11. The method for controlling an actuator control apparatus according to any one of claims 6 to 10, wherein the plurality of different HVAC modes comprise at least one of a ventilation strength selection mode, a ventilation direction selection mode, a ventilation temperature selection mode, a defrost on/off selection mode, an indoor air/outdoor air selection mode, an AC on/off selection mode, and an auto/manual selection mode.
